# EUROPEAN PATENT SPECIFICATION

(11) **EP 2 290 999 B1**
(45) Date of publication and mention of the grant of the patent: **23.05.2012**
(21) Application number: 10181224.6
(22) Date of filing: 25.05.2001
(51) Int. Cl.: H04Q 11/00, H04L 12/28

(54) **Multiple access system for communications network**
Mehrfachzugriffsystem für ein Kommunikationsnetzwerk
Système à accès multiple pour réseau de communications

(30) Priority: 30.05.2000 US 584331
(43) Date of publication of application: 02.03.2011
(62) Divisional of application: 08164713.3
(73) Proprietor: Nortel Networks Limited, St. Laurent, QC H4S 2A9 (CA)
(72) Inventor: Unitt, Brian, Bishop's Stortford, Hertfordshire CM23 2QN (GB); Grant, Michael, Bishop's Stortford, Hertfordshire CM23 4JP (GB); Tate, Christopher, Bishop's Stortford, Hertfordshire CM23 4JU (GB); Wallace, Andrew, Harlow, Essex CM17 9PF (GB); Algie, Glen, OttawaK1V 7H9 Ontario (CA)
(74) Representative: Portch, Daniel

(56) References cited:
- EP-A2- 0 691 760
- EP-A2- 0 713 347
- EP-A2- 0 774 848
- WO-A1-99/30449

## Description

### FIELD OF THE INVENTION

The present invention relates to access networks and to methods of carrying traffic over such networks.

### BACKGROUND OF THE INVENTION

Traditional access networks, servicing residential and small business customers have typically employed optical fibre transmissions to a head end from which customers are served via local distribution units. In the past, the final drop to the customer from the distribution point has comprised a twisted pair copper loop. In many cases this copper loop has previously been installed for telephony purposes.

More recently introduced systems employ optical transmission between the head end and the distribution point, and there is now a incentive to extend the optical transmission path to the customer so as to provide fibre to the home (FTTH). Such a configuration has the advantage of overcoming the severe bandwidth limitations of the copper loop by replacing that loop with a broadband optical path.

In a typical passive optical network providing fibre to the home, a head end or central office, which is typically located at the network operator's local point of presence, is connected to a number of outstations via a fibre network. A single fibre connection links the head end to a passive optical splitter which divides the optical power equally between a number of fibres, each of which terminates at an outstation. Signals sent downstream from the head end arrive at a reduced power level at all outstations. Each outstation converts the optical signal to an electrical signal and decodes the information. The information includes addressing information which identifies which components of the information flow are intended, for a particular outstation. In the upstream direction, each outstation is allocated a time interval during which it is permitted to impress an optical signal on the upstream fibre. The fibres from all outstations are combined at the optical splitter and pass ever the common fibre link to the head end. Signals sourced from any outstation propagate only to the head end. The upstream network may use separate fibre links and splitter, or may use the same network as the downstream direction but using a different optical wavelength. A protocol for organising traffic to and from each outstation, known as the FSAN (Full Service Access Network, ITU specification G.983.1), protocol, has been introduced for this purpose.

Typically, the propagation delay of the optical paths between the head end and each outstation will differ. To prevent collisions on the upstream path, the protocol must allow for this, either by creating a guard band between transmission opportunities for different outstations, or by causing each outstation to build out the optical path delay to a common value by adding delay in the electrical domain. This latter approach has been adopted by FSAN.

FSAN is a relatively complex protocol, requiring large scale integrated circuit technology in a practical system. Such integrated circuits are specialised for the PON application and are therefore costly because of the relatively small volumes used.

A further disadvantage of the FSAN protocol is that it employs asynchronous transfer mode (ATM) transport of traffic. Most, if not all, of this traffic will be Internet Protocol (IP) packet traffic. These IP packets are of variable length, and can be as long as about 1500 bytes. Adaptation of this packet traffic into fixed length ATM cells requires the provision of Interfaces for segmentation and subsequent reassembly of the IP. packets. This requirement adds further to the cost and complexity of the installed system.

It is also known to construct wireless access networks (for example Fixed Wireless Access and Cellular Access) to provide customer network access where construction of wireline access networks is impractical or for other reasons. Whilst bandwidth in wireless systems may be considerably less than that of optical fibre access networks, both are examples of networks in which a head-end makes use of a multi-cast downstream communication medium, whilst multiple outstations share an upstream communications medium to the head-end. Such networks therefore share with optical networks the problems associated with differing path lengths between head-end and each outstation and of sharing a common upstream medium.

An optical communications network having a head end unit connected to a plurality of groups of network termination equipments and/or optical network units is described in European Patent Application Publication Number EP 0691760 A2.

### OBJECT OF THE INVENTION

It is an object of the present invention to provide apparatus, methods, software, and signals which mitigate one or more of the problems associated with the prior art.

### SUMMARY OF THE INVENTION

According to an aspect of the invention, there is provided a method of marshalling upstream communications from a plurality of outstations to a head end in a passive optical network according to claim 1.

According to a further aspect of the invention, there is provided a head end for a communications access network according to claim 6.

According to a further aspect of the invention, there is provided an outstation for a communication access network according to claim 11.

According to a further aspect of the invention, there is provided a method of operating an outstation for a communications network according to claim 14.

### BRIEF DESCRIPTION OF THE DRAWINGS

In order to show how the invention may be carried Into effect, embodiments of the invention are now described below by way of example only and with reference to the accompanying figures in which:
Figure 1 shows a schematic diagram of a passive optical access network (PON) in accordance with a preferred embodiment of the present invention;
Figure 2 shows the structure of a downstream data frame;
Figure 3 shows the structure of a downstream command or pause frame; and
Figure 4 is a flow chart illustrating the use of a multiple access algorithm in the network of figure 1 to marshal upstream transmissions;
Figure 5 shows a schematic diagram of a wireless access network in accordance with a preferred embodiment of the present invention;
Figure 6 shows a schematic timing diagram of downstream and upstream data paths in accordance with the present invention;
Figure 7 is a flow chart illustrating the use of an Xon timer in the network of Figure 1 or Figure 5 to control upstream transmissions;
Figure 8 shows a possible structure of a command frame in accordance with the present invention;
Figure 9 is a flow chart illustrating how the sending of downstream command frames may be controlled at the head end;
Figure 10 is a flow chart illustrating the use, at the head end, of upstream burst delimiter command frames;
Figure 11 shows a schematic diagram of the structure of an outstation In accordance with the present invention.

### DETAILED DESCRIPTION OF PREFERED EMBODIMENTS

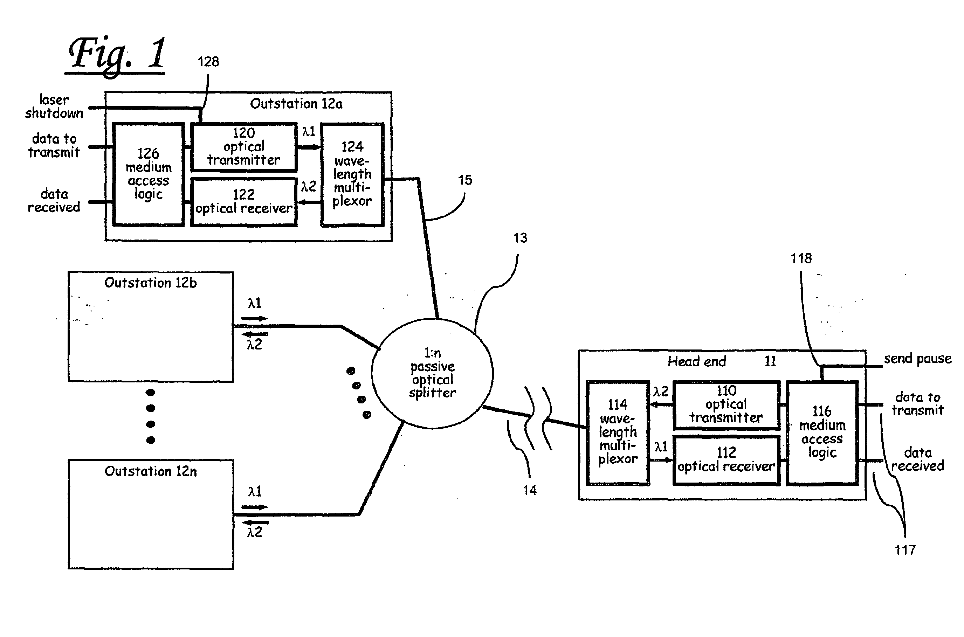

Referring first to figure 1, this shows in schematic form an exemplary FTTH access network in which a head end 11 is connected to a number of customer terminals or outstations 12a-12n through a 1:n passive optical splitter 13 via respective optical fibre paths 14 and 15. Typically, the distance from the head end to the splitter is up to around 5 km. The distance between any two outstations is assumed to be relatively small, typically about 500 m. The splitter 13 is located at a convenient point in the street and requires no power supply. In the system illustrated, downstream and upstream traffic use the same fibres and splitter, but each direction uses a different optical wavelength. Optionally, the network may use separate fibres and splitters for each direction of transmission.

As shown in figure 1, the head end 11 comprises an optical transmitter 110, typically a laser, operating at a first wavelength λ₁, and an optical receiver 112 operating at a second wavelength λ₂. The transmitter and receiver are coupled to fibre 14 via a wavelength multiplexer 114 so as to provide bi-directlonal optical transmission.

The transmitter and receiver are electrically coupled to control logic circuit 116, which circuit provides an interface 117 with an external network (not shown) to receive data to be transmitted downstream to the outstations 12a-12n and to transmit to the external network upstream data received from those outstations.

Each outstation comprises an optical transmitter 120 operating at a the second wavelength λ₂, and an optical receiver 122 operating at the first wavelength λ₁. The transmitter and receiver are coupled to fibre 15 via a wavelength multiplexer 124.

Since the optical path between an outstation and the head end passes through the splitter 13 in each direction, the optical transmission path has higher loss than in a simple point to point arrangement. To compensate for this transmission loss, the head end can be equipped with a powerful laser transmitter 110 and a sensitive receiver 112. Preferably the outstation electro-optics should be based on standard Gigabit Ethernet modules to minimise cost and to minimise the risk of danger from eye exposure at the customer premises.

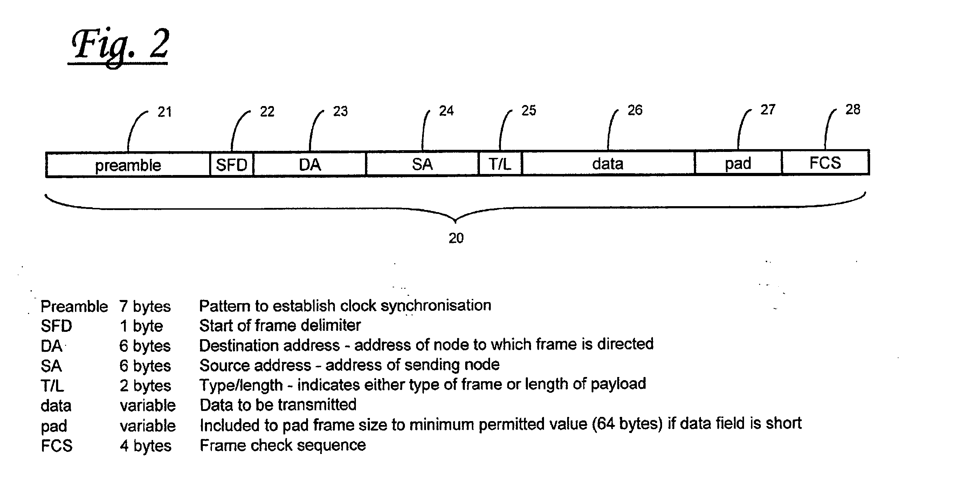

Information frames sent by the head end optical transmitter are broadcast (or multicast) to all outstations via the optical splitter. The structure of a typical Information frame 20, as illustrated in Figure 2, comprises a preamble 21, a start of frame delimiter (SFD) 22, a destination address 23 of the outstation for which the message Is Intended, and a data payload 26. The frame also includes the source address 24 of the sending node, a type/length field 25 indicating either the frame type or the payload length, and a frame check sequence 28. The payload may also include padding 27 if the data length is insufficient to fill the payload space.

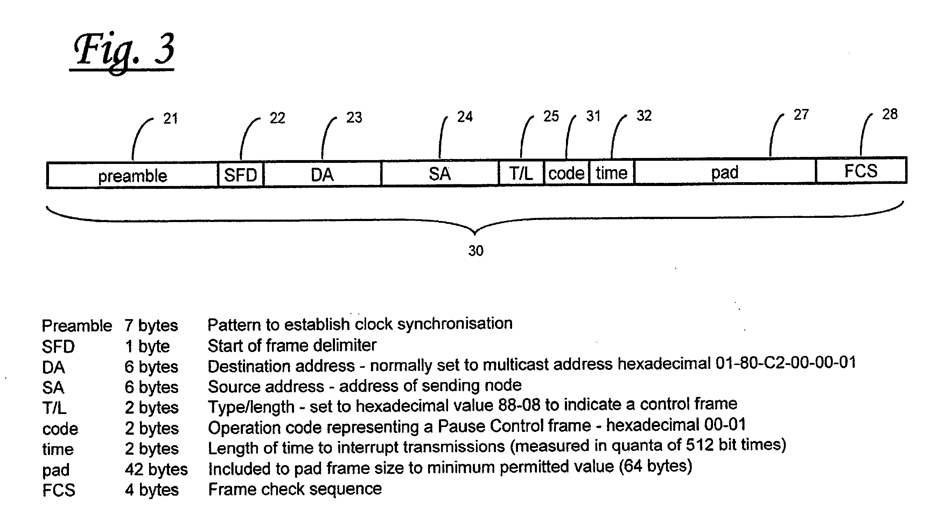

Periodically, these information frames are interspersed with pause control frames generated under control of the head end. The structure of a pause control frame 30 is illustrated in Figure 3. As shown in Figure 3, the pause frame structure is similar to that of the data frame described above with the exception the type/length field 25, which is set to a value indicative of a control frame, is followed by a code field 31 representing a pause command and a time field 32 denoting the length of the pause. The specified pause time can be a pre-set value or zero, and pause frames sent before a previously specified pause time has expired cause any outstanding time interval to be over-ridden.

Figure 1 Illustrates a hardware connection or send pause input 118 to the head end control or medium access logic (MAC) 116 from which transmission of a pause frame can be initiated, This function could also be achieved by software access to an internal control register.

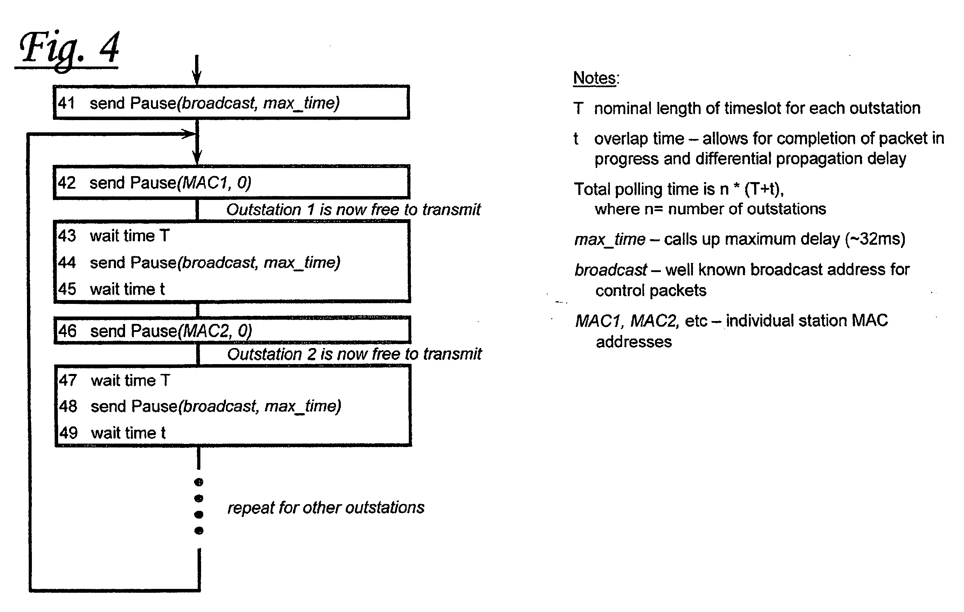

Referring now to Figure 4, the pause mechanism is used herein as a means to achieve marshalling and interleaving of upstream transmissions from the outstations connected to the passive splitter. All outstations are, in principle, able to transmit simultaneously. This is prevented by sending 41, 48 a global pause command to all outstations. Conveniently, this can be done by generating a pause frame containing a well known broadcast address and spoofing a 'long' time interval, where 'long' represents a value which will cause any outstation to cease transmission for a time period that is longer that the desired active slot time for any outstation. The head end allows a 'guard time' which is long enough to ensure that any frame which is already being transmitted has time to complete and upstream signals already on the medium propagate beyond the splitter point. The head end then issues its next pause command 42 containing the individual MAC address of that one of the outstations which is to be allowed to transmit, and specifying a pause time interval equal to a previously determined 'adaptation time'. The pause frame addressed to an individual MAC address is referred to as a 'directed pause frame'. This overrides the previous pause command for that outstation and, once the adaptation time interval has expired, causes any frames queued at the selected outstation to be sent on the medium and subsequently received at the head end. Transmissions from other outstations are inhibited because of the unexpired pause time from the previous pause command 41, 48, Following the desired active slot time, the head end again issues a global pause command 48 and the process repeats for, each of the remaining outstations. Effectively, the head end issues in alternate time periods global pause commands which allow no outstation to transmit to the head end, and individual pause commands which allow one selected outstation to transmit to the head end. Advantageously, the method steps illustrated In Figure 4 may be carried out via a processor programmed with software Instructions.

In a conventional Gigabit Ethernet using a point to point protocol, each optical transmitter remains active even during gaps between frame transmissions, and during pause intervals, when an 'idle' pattern is transmitted to maintain clock synchronisation at the receiver. In the multiple access system described herein, transmission of Idle patterns during pause intervals is suppressed to avoid interference with frame transmissions from the active outstation. A control or laser shutdown input 128 to turn off the transmitting laser in the outstation is shown in Figure 1 for this purpose. This control input can be driven either from real time software running in the outstation's node processor, or can be derived from additional hardware in the outstation.

The adaptation time interval is included to assist in control of the outstation laser (via laser shutdown input 128) and establishing a reliable optical connection to the newly enabled outstation, On receipt of a global pause command, control logic in an outstation is arranged to turn off the outstation laser transmitter once any currently transmitting frame has finished. The outstation MAC will continue to generate the idle pattern, but this pattern will not be impressed on the optical medium since the laser is now turned off. When a subsequent directed pause frame is received, the outstation control logic turns on the laser transmitter immediately. The Ethernet MAC function will continue to source idle patterns, since it is still inhibited from transmitting until the adaptation time has expired. The adaptation time interval allows the operating point of the outstation laser to stabilise, the head end receiver to adapt to the new optical signal level (which may differ between outstations because of laser tolerance and differences in path attenuation) and the receiver clock acquisition circuit to lock to the frequency and phase of the new outstation.

Several elements contribute to the guard time that is required to prevent potential collisions. These elements Include uncertainty in the launch time of the downstream pause frame, because this frame must wait for completion of any data frame already started. There is also uncertainty In the time at which transmission from an active outstation will cease, again, because it must wait for completion of anv data frame in procress. There is also the differential propagation delay between outstations which will cause pause control frames to be received at different outstations at different times due to differing propagation delays. Optionally, the impact of differential propagation delay can be reduced by restricting the physical differential path length to different outstations.

The total time to interrogate all outstations is a compromise between the additional delay introduced by the multiple access mechanism and inefficiencies arising from the guard time. We have found for example that, in a network with 16 outstations, an active slot time of 200 microseconds with a guard band of 40 microseconds and an adaptation time of 10 microseconds leads to a total polling interval of 4 milliseconds and an efficiency of 80% relative to standard point to point full duplex Ethernet. A bounded polling interval together with a minimum guaranteed slot time allow traffic contracts based on specified quality of service.

Optionally, the length of each outstation's active time slot can be varied depending on the level of activity at that outstation and its contracted quality of service. Outstations which have been inactive for a significant length of time may be polled less frequently until new activity is detected, maybe every 100 milliseconds, or longer if it is deemed that the outstation has been turned off or disconnected. These enhancements Increase efficiency at low load and allow unused traffic capacity to be reallocated to active outstations which can therefore achieve a higher burst rate.

When a new outstation is switched on and connected to the network, preferably its optical transmitter should be inhibited until the receive chancel has a chance to synchronise with the downstream transmissions from the head end so as to avoid corrupting timeslots allocated to other outstations before receiving a global pause command from the head end.

To increase the downstream capacity of the network, either initially or as an upgrade to an existing network, traffic in the downstream direction may use multiple wavelengths, each wavelength being detected at one or more outstations using wavelength selective filters or couplers installed either in the outstations or at the coupler site. In this way, an asymmetrical network is generated, having higher capacity in the downstream direction. Pause frames would be launched on all active wavelengths to ensure all outstations receive timely pause commands.

As discussed above, it is preferred to employ separate wavelengths for upstream and downstream transmission to allow transmissions from the head end to be removed from the collision domain. The network can then work in full duplex, where downstream transmissions take place concurrently with upstream.

Optionally, the head end can be connected to the star coupler 13 using a single optical fibre (instead of a fibre pair) by adding wavelength multiplexers at each end of the fibre connection.

In a preferred implementation, a global pause command is used to turn off all outstations following an active transmission slot. This has the advantage of increasing system robustness since, if a 'turn off' pause command is corrupted and the currently active outstation continues to transmit beyond its allocated transmission slot, it is likely to cause corruption of data transfer from the outstation to which the next transmission slot is allocated. However, once this subsequent slot is complete, a further global pause command will be sent which will again be interpreted by all outstations as a 'tun off' signal. Therefore, since it is unlikely that multiple consecutive global pause commands will be corrupted, transmission disruption is confined to a small number of transmission slots.

Optionally, Instead of using a global pause command to turn off all outstations at the end of an active slot, a directed pause could be employed, addressed to the outstation to be turned off. Other outstations would remain turned off until their own directed pause time is overwritten by a directed pause frame containing the adaptation time. This is not the preferred implementation since the robustness of the system is reduced. However, it allows the head end of the system to be implemented using standard Ethernet switch components with an external controller (such as a computer processor running a real time operating system) to generate the sequence of pause command frames. (It should be noted that some Ethernet components delete incoming pause frames carrying the standard multicast address. This prevents global pause commands traversing such components.)

Optionally, the relative timing of the pause command frames intended to stop a first outstation from transmitting and permit a second outstation to transmit may be adjusted to reduce the guard band needed between transmissions from the two outstations using knowledge of the differential distance from the head end to each of the outstations, Such knowledge can be derived from physical distance measurements or by measuring electronically the round trip time for signals sent from the head end and looped back from the outstation.

Optionally, transmission of data frames from the head end may be inhibited when the time interval remaining before the next pause command frame is scheduled to be transmitted is less than the time needed to transmit a further data frame from the queue. This reduces the timing uncertainty arising from the need to wait for a current data frame to finish before a control frame can be transmitted and allows the size of the guard band to be reduced.

Optionally, downstream and upstream paths can operate at different bit rates. In residential applications, the required upstream transmission rate is often significantly lower than the required downstream rate. For example, downstream transmission may be based on 1 Gbit/s Ethernet and upstream transmission on 100 Mbit/s. In such circumstances, cost savings accrue from the reduced cost of upstream laser transmitters designed for lower bit rate operation and the associated reduction in optical power budget requirements.

Optionally, the outstation laser control logic may include a watchdog timer which turns off the transmitting laser after a predetermined time has elapsed following the receipt of a pause control frame addressed to that outstation, where the predetermined time interval is longer than the longest expected active transmission time slot. This limits corruption of upstream traffic from other outstations should the receive path to an outstation fail during its active time slot.

In practice, it is also possible for a contact wire to the outstation laser to break, leaving the laser switched on (i.e. "laser-on" failure). The effects of such a failure may be instigated by adding a switch in the power supply path to the laser, and arranged to switch off the laser after a predetermined time relative to its being switched on.

Conveniently, the head end may exert back pressure flow control on one or more outstations by increasing the adaptation time specified in the directed pause frame beyond that needed for components in the optical path to adjust to the operating conditions of the new outstation. This technique can be used to reduce congestion in the upstream path on the network side of the head end, or to throttle the amount of data the customer is permitted to send, according to a service contract, if the outstation is arranged to prioritise upstream traffic such that high priority traffic is sent first, then throttling the upstream path using this technique will still allow high priority traffic to receive preferential treatment. (Methods for indicating traffic priority are well known and include, for example, techniques specified in IEEE standard 802.1.) In the limit, if this adaptation time is increased to be equal to or greater than the active slot time, that outstation will not be able to send any data in that specific transmission slot.

There remains the question of the introduction and attachment of a 'joiner" outstation Into an existing access network as described. As previously mentioned, the head-end directs frames to the outstation by using its station MAC address as the frame destination MAC address. However, If a new outstation is attached, its station MAC address is not necessarily known at the head-end. It is therefore desirable to provide a means by which the outstation station MAC address and other associated user Information can be automatically transferred to the head-end.

This invention uses an additional upstream slot for the purpose of co-ordinating the Introduction of a joiner outstation. This slot is provided using the same "pause" mechanism as that used to provide upstream time slots. Here the start of the slot will be indicated by a pause frame with a specific destination MAC address recognised at each outstation which may also be a member of a predetermined multi-cast group. However, the control slot will normally only occur relatively Infrequently relative to the "round robin" cycle so as not to impact the efficiency of the PON significantly. This control slot is decoded by all outstations on the PON as an indication that any new joiner is free to transmit. Only those outstations which have not been acknowledged as PON members shall use this slot. New joiners will include outstations which: are programmed to initial factory settings; have been moved from another PON; have been commanded to re-join the PON by the head-end. [It is possible that the joining procedure may be used following every Outstation Optical Network Unit (ONU) power-up cycle although this is not seen as necessary].

A preferred embodiment uses the complete control slot for the upstream transmission opportunity. A new joiner outstation must not turn on its laser and transmit during the traffic related timeslots. The only time it is permitted to turn on its laser and transmit is during a control slot and only then under given conditions. When a joiner outstation receives the "pause" frame to indicate the start of the control slot it does not necessarily transmit immediately. In order to reduce the conflict between outstations attempting to join the PON simultaneously, a pseudo-random algorithm is used to determine exactly when the outstation will transmit. The likelihood of transmission should be chosen to be relatively small since the system needs to cope with all members of a PON (say 16) attempting to join at the same time. In order to join the PON the outstation must send a "join" control frame to the head-end. This frame will automatically contain the station MAC address of the joining outstation and could also contain other information in the data payload if required for authentication. In response to the request to join, the outstation must validate and then acknowledge to the joiner station MAC address. This may or may not involve changing the time slot allocation frame to include an additional timeslot. If the outstation falls to receive a valid joiner acknowledgement frame within a given period of time it must then attempt to rejoin using a pseudo-random back-off time. A scheme known as "truncated binary exponential back-off" used in CSMA/CD half duplex Ethernet is suggested as follows:
- The back-off delay is an integer multiple of the slot time. The number of slot times to delay before the n-th retransmission attempt is chosen as a uniformly distributed random integer r in the range 0 ≤ r < 2k where k = min (n, 10)

In any case, the back-off time should be chosen so as to generally increase with the number of failed attempts in order to reduce congestion in the joiner control slot. The random number generation should also be chosen so as to minimise number correlation between outstations. Encryption for security is optional.

A further enhancement is to allow multiple transmission opportunities within each control slot. This has the potential to allow more than one outstation to join during a single control timeslot and reduces the required number of control timeslots (and hence reduces the control slot overhead). As such, the control slot is subdivided into a number of smaller periods, or sub-timeslots, each of which is an outstation transmission opportunity. In order to implement this enhancement the outstation must autonomously turn on and extinguish its laser for a specific defined period within a control slot. Here, the outstation receives a pause frame indicating the start of the control timeslot and a timer (internal to each outstation) is used to delimit the individual sub-timeslots.

Deregistration of an outstation by the headend may occur every time the outstation is switched off (detected, for example, by lack of response from that outstation over a relatively long predefined period) and re-registration may occur on each power-up, Where an outstation receives no indication of its allocation of a timeslot for a relatively long predetermined period, or is switched back on, it may assume that the head end has assumed it is has disconnected. The outstation then re-registers.

Whilst the foregoing description is given In terms of an optical network, it will be apparent that the invention is not limited in its application to such networks. It may also, for example, be applied to physical media such as wireless or high speed copper, in addition to optical media.

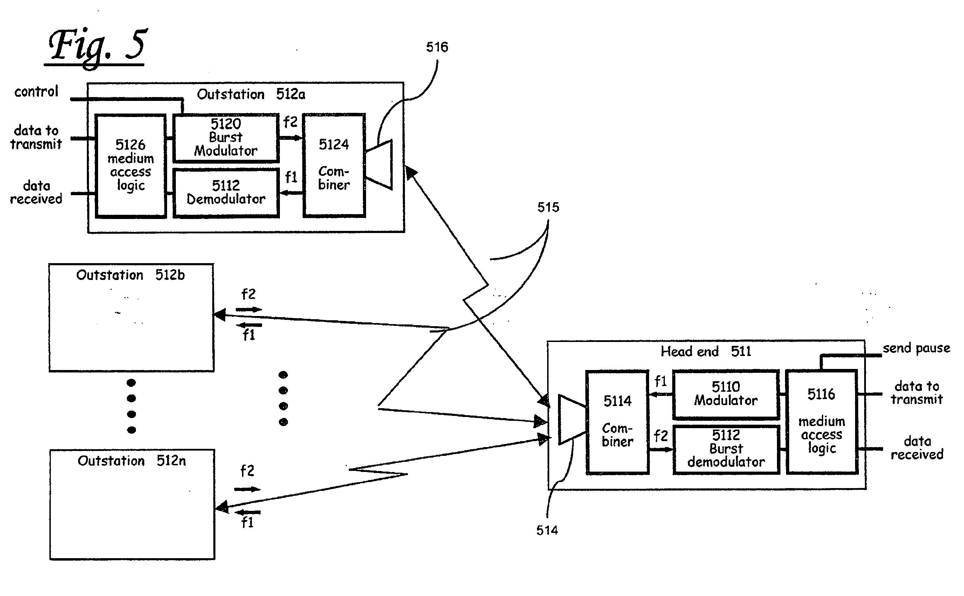

Referring now to Figure 5, this shows in schematic form an exemplary wireless access network, analogous to the optical access network of Figure 1, in which a head end 511 is connected to a number of customer terminals or outstations 512a-512n through a broadcast wireless path 515. The distance between any two outstations is assumed to be relatively small, typically about 500 m, but may be greater. In the system illustrated, downstream and upstream traffic use different frequencies, f1 and f2.

As shown in figure 5, the head end 511 comprises a modulator 5110 operating at a full frequency f1 and an burst demodulator 5112 operating at a second frequency f2, The transmitter and receiver are coupled to antenna 514 via a combiner 5114 so as to provide bi-directional wireless transmission.

The transmitter and receiver are electrically coupled to control logic circuit 5116, which circuit provides an interface with an external network (not shown) to receive data to be transmitted downstream to the outstations 512a-512n and to transmit to the external network upstream data received from those outstations.

Each outstation comprises an modulator 5120 operating at a the second frequency f2, and an burst demodulator 5112 operating at the first frequency f1. The modulator and demodulator are coupled to antenna 516 via a combiner 5124.

In this wireless embodiment, the total time to interrogate all outstations is again a compromise between the additional delay introduced by the multiple access mechanism and inefficiencies arising from the guard time. It is found for example that, in a network with 10 outstations, an active slot time of 1 millisecond with a guard band of 0.250 milliseconds leads to a total polling interval of 11.5 milliseconds and an efficiency of 80% relative to standard point to point full duplex Ethernet. A bounded polling internal together with a minimum guaranteed slot time allow traffic contracts based on specified quality of service.

In an alternative embodiments, rather than sending a multicast pause signal followed by a directed pause signal, each outstation is arranged to receive a directed command frame (a "directed burst" frame) comprising transmit duration. On receipt of such a frame, the recipient outstation is permitted to transmit upstream for a period not exceeding that indicated In the command frame.

Whereas in the first embodiment described above, the outstation transmitters are by default "on" in the absence of a command signal from the head end to the contrary, in the second embodiment the outstation transmitters are by default in principle "off" (in practice on "stand-by") in the absence of a command frame to the contrary.

The second embodiment has the added advantage of potentially requiring fewer downstream command frames per upstream time slot (i.e. one directed burst frame as opposed to a multicast pause plus a directed pause frame). This allows the "t" guard band to be further minimised since the transmitting outstation upstream Ethernet Mac scheduler can accurately shut down upstream, rather than additionally having to potentially spool a maximum size packet which, for example, on a 100Mbps fast Ethernet port adds 120 microsecond to "t". This in turn allows more outstations per shared upstream, and increases bandwidth efficiency. It is noted that both latency and jitter may be highly sensitive to the choice of the head end scheduler's "t" value. On 100Mbps links, the previously discussed guard bands become much more critical to the overall efficiency of the shared upstream bandwidth. The following items can reduce these guard bands significantly.

One can also mix the signals in the two methods, in appropriate ways, depending on the physical layer (PHY) transmission characteristics and the limitations of the Ethernet switching MAC layer specific to a equipment vendor. For example if it is easier for an ASIC vendor to leave the MAC normally "on", then the multicast pause signal to turn all outstations off periodically can be sent in combination with a directed burst control signal (as opposed to a directed pause signal) which still offers little "t" guard band reductions.

In a still further enhancement, a burst delimiter message is appended to a time sliced upstream burst at the outstation. This allows for more intelligent head end time slice scheduling based on feedback from the outstation. In general the upstream burst delimiter may contain information indicative of the volume of traffic - processed and/or pending - for upstream transmission since the last allocated time slot. The burst delimiter may be sent upon completion of the currently allocated time slot (or at the beginning of an allocated time slot). For example, the burst delimiter command frame may contain per Ethernet MAC upstream burst or running counter). Alternatively distinct command frames may be used each to indicate:
- an "end of burst" delimiter signal where available traffic for transmission upstream is less than the allocated time slot allows and
- a "more to burst" delimiter signal where the amount of traffic available for upstream transmission exceeds the allocated time slot.

Upstream transmission of such burst delimiter command frames allows the head end to dynamically resize upstream time slots allocated to outstations. This helps concentrate the complexity of scheduling In the head end rather than in the outstations, thereby reducing cost and complexity at the outstation, whilst maximising bandwidth efficiency at both high bit rates (e.g. 1000Mbps) and especially at lower bit rates (e.g. 100Mbps) of point to multipoint Ethernet first mile networks.

Specifically, In the case of a burst delimiter command frame indicative of an outstation having no more data to transmit upstream, the head end may react to an "end of burst" signal by immediately allocating a time slot to another outstation, thereby avoiding wasted upstream bandwidth when an outstation has no more traffic to transmit. The burst delimiter information may also be used at the head end to create a compiled history of the decision dynamics of a short term burst profile for each, or all, outstations. The head end can then use a token debit/credit system for controlling committed and excessive outstation upstream fairness processing on next or future burst time slots allocated to outstations.

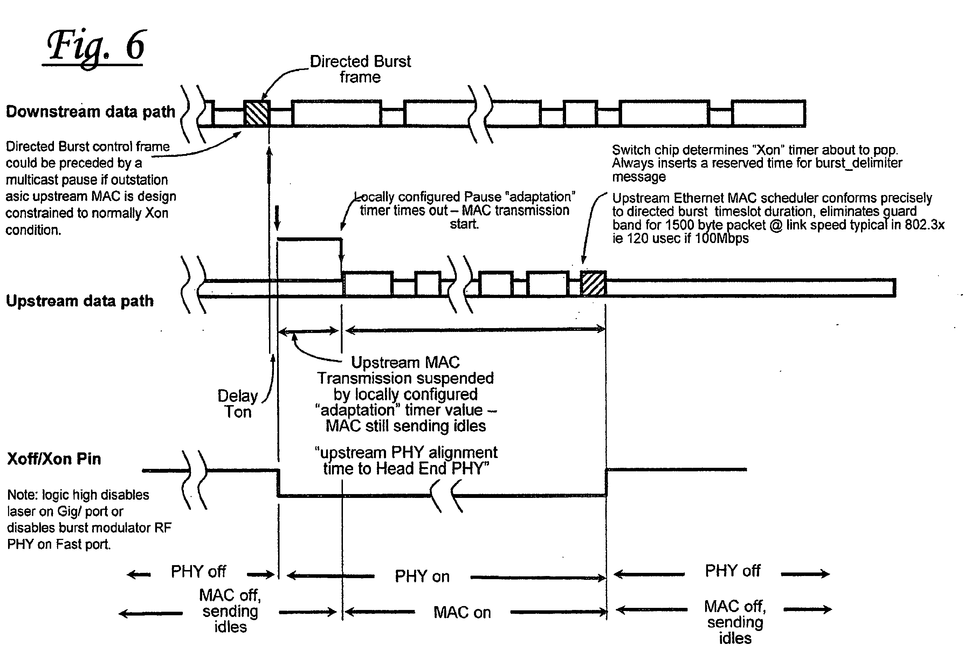

Referring now to Figure 6, the detailed operation of the method Is as follows. After a hard or soft reset, the initialised condition of PHY disable (Xon/Xoff) pin is 'logic high' (i.e. PHY is normally turned off).

Preferably, this 802.3x-like Burst PHY control method is enabled by setting a bit in an ASIC control register. When the feature is enabled by setting such a control bit, the initialised condition of laser disable is 'logic high' (that is, the laser is turned off). The default (reset) state of the control bit should disable the laser control feature.

Preferably, a new Xon/Xoff PHY control pin on the Ethernet switch / MAC ASIC is reserved for this optional Burst PHY control feature. Preferably, an ASIC control specified Ethernet MAC port (Gigabit Ethernet or Fast Ethernet) for a multi-port switch ASIC arrangement. There is also an ASIC control register in which the Ethernet MAC port or the switch asic Ethernet MAC address can be set for the directed pause or burst control feature to use. This Burst PHY control feature makes use of a configurable ASIC control register for the adaptation timer value (rather than using directed pause timer as in Method B, this allows upstream scheduler to be more intelligent and enable a minimized "t" guard band by knowing ahead of time when the end of transmission event will occur)

Upon directed_burst reception, the "Xon/Xoff pin goes logic low' (i.e. Burst PHY is turned on), but upstream MAC transmission (to the Head End or wireless BTS) is suspended by a provisioned adaptation timer value (whose operation is similar to that described above for the pause-based method), where the MAC is still sending Idles during this "upstream Burst PHY alignment time". When the provisioned adaptation timer expires, upstream MAC transmission is resumed and the directed burst timer value is now used as a "Xon" timer. Upon expiry of the directed burst "Xon" timer, the upstream MAC optionally appends a burst delimiter message - a feature which can be turned off or built in to an outstation's switch ASIC as needed - then enters the paused state.

The upstream MAC can also be disabled by means of a multicast pause with a non-zero timer value. When the upstream MAC transmit function is in the paused state, the MAC will transmit idle symbols as defined in the IEEE Gigabit Ethernet specification; similarly for the Fast Ethernet port. In this case, the burst PHY Xon/Xoff pin will be in a "logic high" state.

Delay "Ton" is the processing time at the outstation for a directed burst message

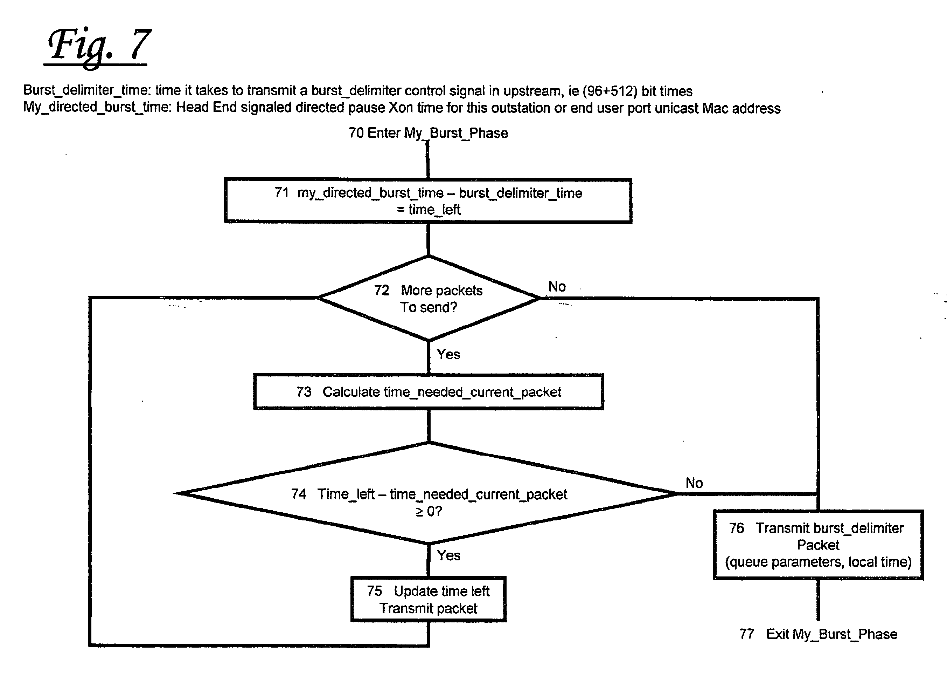

Referring now to Figure 7, at the outstation upstream MAC egress port, before taking a packet off the egress queue destined for the upstream, each packet length shalt be inspected and a determination made as to whether, given the upstream link speed (e.g. 100Mbps or 1000Mbps), there is time to transmit the packet before the end of the signalled timeslot timer (signalled as the Xon timer in the directed_burst message) expires. Where appropriate, this calculation should also take into account the time required to append and transmit a burst_delimiter message as the final upstream packet.

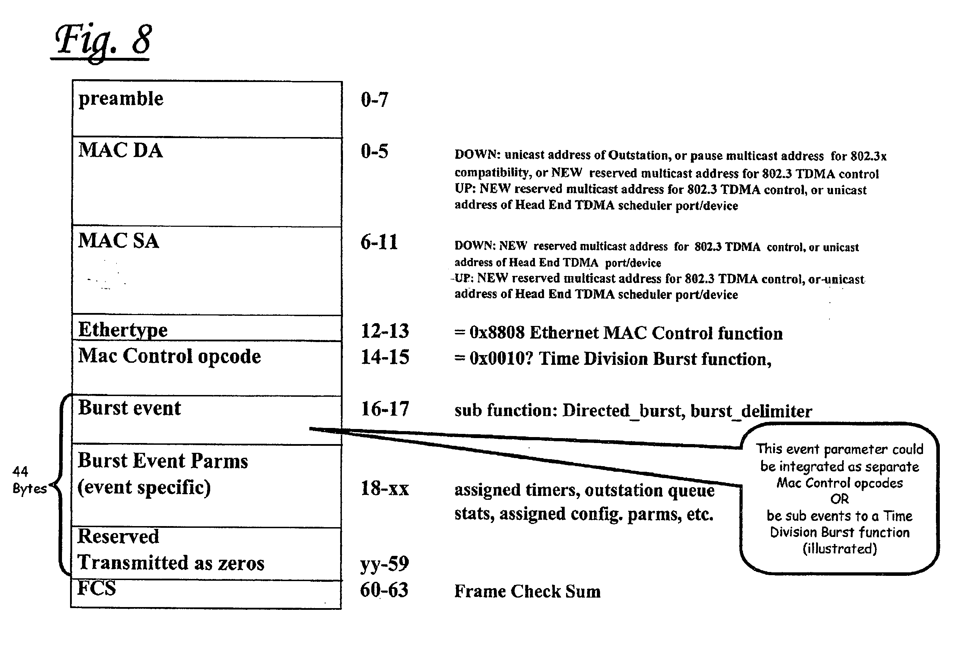

Referring now to Figure 8, there is shown the structure of a command frame format appropriate for carrying the necessary command frames in accordance with the present invention. The figure illustrates the component fields of the frame, the bits allocated per field, and the nature of the information carried in each field. The burst event field could alternatively be integrated as separate Mac control operation codes, or be sub-events to a time division burst function as illustrated in Figure 8.

in addition to the above, the following features will improve the robustness of the protocol, but are not essential for its basic operation. Preferably, error conditions are readable by the attached node processor via bits in a status register. Optionally, when an error condition arises the MAC may generate an interrupt.

Preferably, there should be a read-only status bit asic register which indicates that the MAC/Switch chip supports burst PHY control and it's current on/off condition.

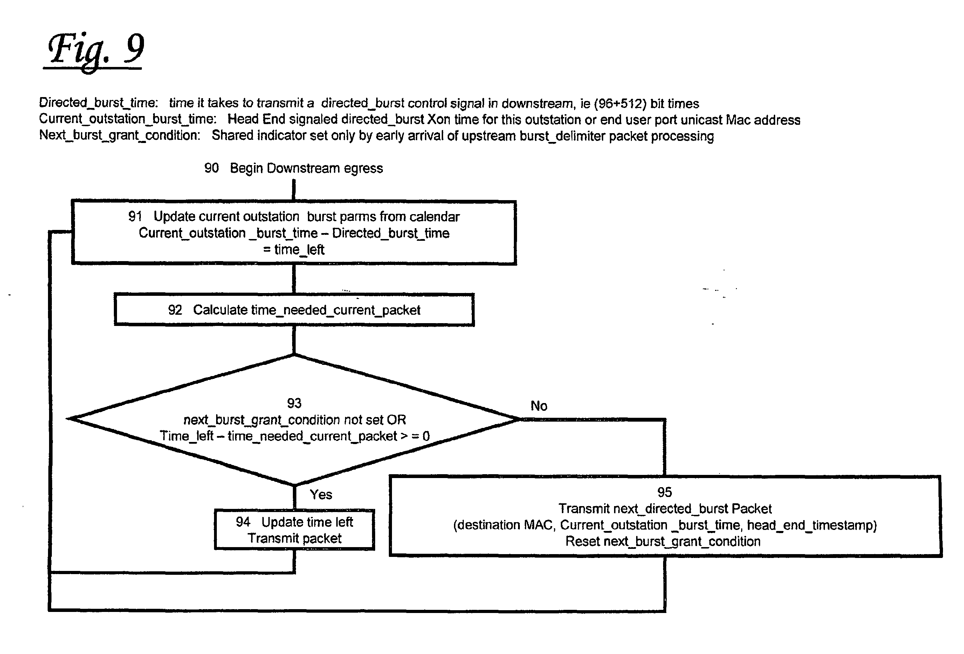

Referring now to Figure 9; it would be desirable for upstream bandwidth efficiency reasons that the head end downstream egress method utilize a similar optimization to that used at the outstation upstream egress method when inserting a directed_burst command Into the downstream. To avoid the potential head end wait time to send a multicast pause plus a directed pause, or to send a directed burst command to an outstation, the downstream MAC may check the time required to send a directed burst local parameter before each packet is pulled off the egress queue for the downstream port. A head end downstream burst control flow is given for reference purposes.

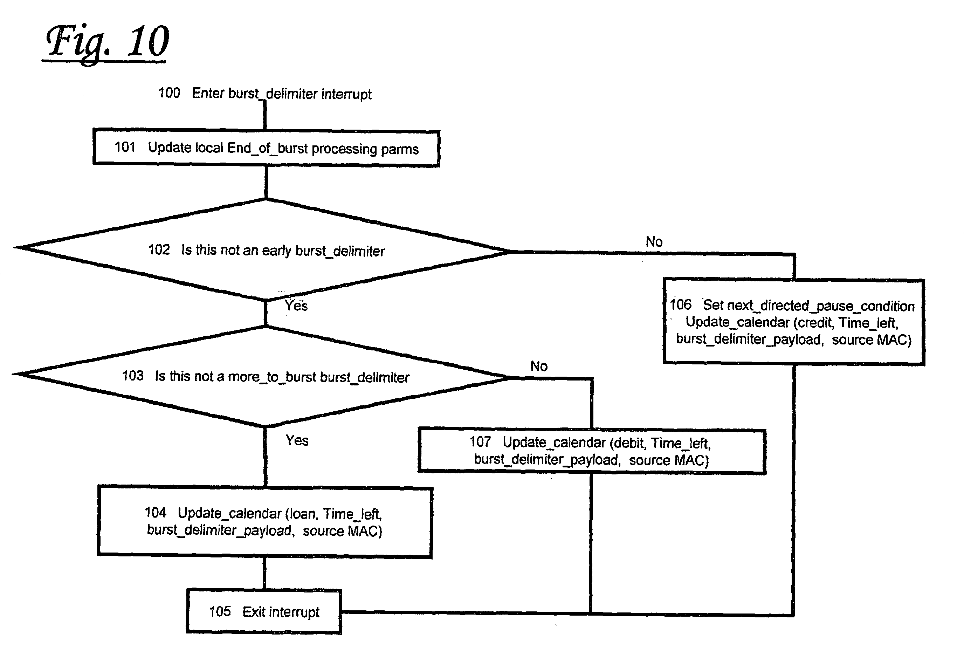

Referring now to Figure 10, a flow control method is given for the head end receiving the upstream traffic, and in which the previously discussed burst delimiter message is processed and dynamic updates are made to the overall outstations upstream burst allocation schedule. Updates may affect current, next, or future allocated time slots for an individual outstation's committed and excessive service level agreement policy.

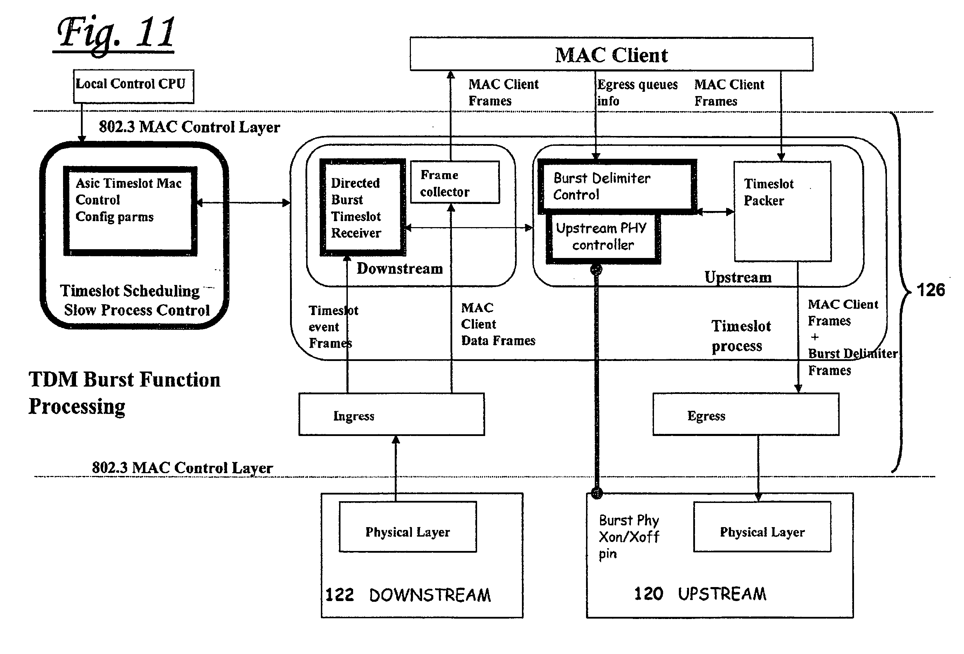

Referring now to Figure 11 there is shown a more detailed outstation system perspective of how the various components associated in the burst method interact. These include upstream (PHY layer control and burst delimiter control) and downstream (directed burst and future configuration control) forwarding process interactions needed in the outstation MAC Control layer, it illustrates how local ASIC configuration control parameters are set by the local CPU, or by a remote configuration control command interfaces to the Burst MAC Control Layer method.

Whilst the invention has been described above in terms of two broad embodiments employing respectively a combination of multi-cast pause and directed pause signals, and directed burst commands, it will be apparent to one skilled in the Art that other combinations of such messages is also both possible and practical.

It will also be apparent to one skilled in the Art that the methods described apply not just to tree-structured point-to-multipoint networks such as those illustrated in Figures 1 and 5, but also to those networks conventionally described as "ring" networks (or point to consecutive point networks as they are known in the field of wireless communication).

Any range or device value given herein may be extended or altered without losing the effect sought, as will be apparent to the skilled person for an understanding of the teachings herein.

## Claims

1. A method of marshalling upstream communications from a plurality of outstations (12a, 12b, 12n) to a head end (11) in a passive optical network, the method comprising the steps of:
generating a downstream Ethernet command frame (30) having a MAC Destination Address Field (23) corresponding to an outstation (12a) selected to be permitted to transmit upstream to the head end (11) and comprising a field indicating a transmit duration during which the selected outstation (12a) is permitted to transmit upstream to the head end (11); and
sending the downstream Ethernet command frame (30) from the head end (11) to allow that one selected outstation (12a) to commence its upstream transmission for the transmit duration indicated by the command.

2. A method as defined in claim 1, further comprising receiving at the head end upstream Ethernet command frames transmitted upstream from outstations, the upstream Ethernet command frames containing information indicative of availability of data for upstream transmission from the outstations to the head end.

3. A method as defined in claim 2, further comprising responding at the head end to the received upstream Ethernet command frames to dynamically adjust transmit durations indicated in downstream Ethernet command frames transmitted by the head end to selected outstations.

4. A method as defined in any of claims 1 to 3, wherein the steps of generating and sending the downstream Ethernet command frame are performed in a 802.3 MAC Control Layer of the head end.

5. A method as defined in any of claims 1 to 4, wherein the command frame are distinguishable from data frames by having a Type/length field set to a specific value reserved for control frames.

6. A head end (11) for a communications network comprising plural outstations (12a, 12b, 12n) connected to the head end (11) by a common optical transmission link (14), the head end (11) comprising:
means (116) for generating a downstream Ethernet command frame (30) having a MAC Destination Address Field (23) corresponding to an outstation (12a) selected to be permitted to transmit upstream to the head end (11) and comprising a field indicating a transmit duration during which the selected outstation is permitted to transmit upstream to the head end; and
means (110) for sending the downstream Ethernet command frame from the head end (110) to allow that one selected outstation to commence its upstream transmission for the transmit duration indicated by the command.

7. A head end as defined in claim 6, further comprising means for receiving at the head end upstream Ethernet command frames transmitted upstream from outstations, the upstream Ethernet command frames containing information indicative of availability of data for upstream transmission from the outstations to the head end.

8. A head end as defined in claim 7, further comprising means for responding at the head end to the received upstream Ethernet command frames to dynamically adjust transmit durations indicated in downstream Ethernet command frames transmitted by the head end to selected outstations.

9. A head end as defined in any of claims 6 to 8, wherein a 802.3 MAC Control Layer of the head end comprises the means for generating the downstream Ethernet command frame and the means for sending the downstream Ethernet command frame.

10. A head end as defined in any of claims 6 to 9, wherein the command frame are distinguishable from data frames by having a Type/length field set to a specific value reserved for control frames.

11. An outstation (12a) for a communications network comprising plural outstations (12a, 12b, 12n) connected to a head end (11) by a common optical transmission link (14), the outstation comprising:
means (122) for receiving from the head end a downstream Ethernet command frame (30) having a MAC Destination Address Field (23) and comprising a field indicating a time period during which a selected outstation corresponding to the destination address is permitted to transmit upstream to the head end (11);
means (126) for determining whether the received MAC Destination Address Field contains a MAC address assigned to the outstation (12a); and
means (120) for transmitting to the head end (11) upstream Ethernet data packets during the indicated time period when the received MAC Destination Address is a MAC address assigned to the outstation (12a).

12. An outstation as defined in claim 11, wherein the means for transmitting is responsive to the means for determining to not transmit upstream to the head end when the received MAC Destination Address is not the MAC address assigned to the outstation.

13. An outstation as defined in claim 11, further comprising means for transmitting upstream Ethernet command frames containing information indicative of availability of data for upstream transmission from the outstation to the head end.

14. A method of operating an outstation for a communications network comprising plural outstations (12a, 12b, 12n) connected to a head end (11) by a common optical transmission link (14), the method comprising:
receiving from the head end (11) a downstream Ethernet command frame (30) having a MAC Destination Address Field (23) and comprising a field indicating a time period during which a selected outstation (12a) corresponding to the destination address is permitted to transmit upstream to the head end (11);
determining whether the received MAC Destination Address is a MAC address assigned to the outstation (12a); and
transmitting to the head end (11) upstream Ethernet data packets during the indicated time period when the received MAC Destination Address is a MAC address assigned to the outstation (12a).

15. A method as defined in claim 14, further comprising not transmitting upstream to the head end when the received MAC Destination Address is not a MAC address assigned to the outstation.

16. A method as defined in claim 14, further comprising transmitting upstream Ethernet command frames containing information indicative of availability of data for upstream transmission from the outstation to the head end.

## Patentansprüche

1. Verfahren für das Marshalling von stromaufwärts gerichteten Nachrichten von einer Vielzahl von Gegenstationen (12a, 12b, 12n) zu einer Kopfstelle (11) in einem passiven optischen Netz, wobei das Verfahren die folgenden Schritte umfasst:
das Erzeugen eines stromabwärts gerichteten Ethernet-Kommandorahmens (30), der ein MAC-Zieladressenfeld (23) hat, das einer Gegenstation (12a) entspricht, die dafür ausgewählt ist, dass ihr erlaubt wird, stromaufwärts zu der Kopfstelle (11) zu senden, und ein Feld umfasst, das eine Sendedauer angibt, während derer es der ausgewählten Gegenstation (12a) erlaubt wird, stromaufwärts zu der Kopfstelle (11) zu senden, und
das Senden des stromabwärts gerichteten Ethernet-Kommandorahmens (30) von der Kopfstelle (11), um zu ermöglichen, dass eine ausgewählte Gegenstation (12a) ihre stromaufwärts gerichtete Übertragung für die durch das Kommando angegebene Sendedauer beginnt.

2. Verfahren nach Anspruch 1, das ferner das Empfangen von stromaufwärts gerichteten Ethernet-Kommandorahmen an der Kopfstelle umfasst, die von Gegenstationen stromaufwärts gesendet werden, wobei die stromaufwärts gerichteten Ethernet-Kommandorahmen Informationen enthalten, welche die Verfügbarkeit von Daten für eine stromaufwärts gerichtete Übertragung von den Gegenstationen zu der Kopfstelle angeben.

3. Verfahren nach Anspruch 2, das ferner das Antworten auf die empfangenen stromaufwärts gerichteten Ethernet-Kommandorahmen an der Kopfstelle umfasst, um dynamisch die Sendedauern anzupassen, die in den stromabwärts gerichteten Ethernet-Kommandorahmen angegeben sind, die durch die Kopfstelle an ausgewählte Gegenstationen gesendet werden.

4. Verfahren nach einem der Ansprüche 1 bis 3, wobei die Schritte des Erzeugens und des Sendens des stromabwärts gerichteten Ethernet-Kommandorahmens in einer 802.3-MAC-Steuerungsschicht der Kopfstelle ausgeführt werden.

5. Verfahren nach einem der Ansprüche 1 bis 4, wobei die Kommandorahmen **dadurch** von Datenrahmen zu unterscheiden sind, dass sie ein Typen-/Längenfeld haben, das auf einen spezifischen Wert gesetzt ist, der für Steuerungsrahmen reserviert ist.

6. Kopfstelle (11) für ein Kommunikationsnetz, das mehrere Gegenstationen (12a, 12b, 12n) umfasst, die durch einen gemeinsamen optischen Übermittlungsabschnitt (14) mit einer Kopfstelle (11) verbunden sind, wobei die Kopfstelle (11) Folgendes umfasst:
Mittel (116) für das Erzeugen eines stromabwärts gerichteten Ethernet-Kommandorahmens (30), der ein MAC-Zieladressenfeld (23) hat, das einer Gegenstation (12a) entspricht, die dafür ausgewählt ist, dass ihr erlaubt wird, stromaufwärts zu der Kopfstelle (11) zu senden, und ein Feld umfasst, das eine Sendedauer angibt, während derer es der ausgewählten Gegenstation erlaubt wird, stromaufwärts zu der Kopfstelle zu senden, und
Mittel (110) für das Senden des stromabwärts gerichteten Ethernet-Kommandorahmens von der Kopfstelle (110), um zu ermöglichen, dass eine ausgewählte Gegenstation ihre stromaufwärts gerichtete Übertragung für die durch das Kommando angegebene Sendedauer beginnt.

7. Kopfstelle nach Anspruch 6, die ferner Mittel für das Empfangen von stromaufwärts gerichteten Ethernet-Kommandorahmen an der Kopfstelle umfasst, die von Gegenstationen stromaufwärts gesendet werden, wobei die stromaufwärts gerichteten Ethernet-Kommandorahmen Informationen enthalten, welche die Verfügbarkeit von Daten für eine stromaufwärts gerichtete Übertragung von den Gegenstationen zu der Kopfstelle angeben.

8. Kopfstelle nach Anspruch 7, die ferner Mittel für das Antworten auf die empfangenen stromaufwärts gerichteten Ethernet-Kommandorahmen an der Kopfstelle umfasst, um dynamisch die Sendedauern anzupassen, die in den stromabwärts gerichteten Ethernet-Kommandorahmen angegeben sind, die durch die Kopfstelle an ausgewählte Gegenstationen gesendet werden.

9. Kopfstelle nach einem der Ansprüche 6 bis 8, wobei eine 802.3-MAC-Steuerungsschicht der Kopfstelle die Mittel für das Erzeugen des stromabwärts gerichteten Ethernet-Kommandorahmens und die Mittel für das Senden des stromabwärts gerichteten Ethernet-Kommandorahmens umfasst.

10. Kopfstelle nach einem der Ansprüche 6 bis 9, wobei die Kommandorahmen **dadurch** von Datenrahmen zu unterscheiden sind, dass sie ein Typen-/Längenfeld haben, das auf einen spezifischen Wert gesetzt ist, der für Steuerungsrahmen reserviert ist.

11. Gegenstation (12a) für ein Kommunikationsnetz, das mehrere Gegenstationen (12a, 12b, 12n) umfasst, die durch in einen gemeinsamen optischen Übermittlungsabschnitt (14) mit einer Kopfstelle (11) verbunden sind, wobei die Gegenstation Folgendes umfasst:
Mittel (122) für das Empfangen eines stromabwärts gerichteten Ethernet-Kommandorahmens (30) von der Kopfstelle, der ein MAC-Zieladressenfeld (23) hat und ein Feld umfasst, das eine Sendedauer angibt, während derer es einer ausgewählten Gegenstation, die der Zieladresse entspricht, erlaubt wird, stromaufwärts zu der Kopfstelle (11) zu senden,
Mittel (126) für das Feststellen, ob das empfangene MAC-Zieladressenfeld eine MAC-Adresse enthält, die der Gegenstation (12a) zugewiesen ist, und
Mittel (120) für das Senden von stromaufwärts gerichteten Ethernet-Datenpaketen während des angegebenen Zeitraumes, wenn die empfangene MAC-Zieladresse eine MAC-Adresse ist, die der Gegenstation (12a) zugewiesen ist.

12. Gegenstation nach Anspruch 11, wobei die Mittel für das Senden auf die Mittel für das Feststellen so reagieren, dass sie nicht stromaufwärts zu der Kopfstelle senden, wenn die empfangene MAC-Zieladresse nicht die MAC-Adresse ist, die der Gegenstation zugewiesen ist.

13. Gegenstation nach Anspruch 11, die ferner Mittel für das Senden von stromaufwärts gerichteten Ethernet-Kommandorahmen umfasst, die Informationen enthalten, welche die Verfügbarkeit von Daten für eine stromaufwärts gerichtete Übertragung von den Gegenstationen zu der Kopfstelle angeben.

14. Verfahren für das Betreiben einer Gegenstation für ein Kommunikationsnetz, das mehrere Gegenstationen (12a, 12b, 12n) umfasst, die durch in einen gemeinsamen optischen Übermittlungsabschnitt (14) mit einer Kopfstelle (11) verbunden sind, wobei das Verfahren Folgendes umfasst:
das Empfangen eines stromabwärts gerichteten Ethernet-Kommandorahmens (30) von der Kopfstelle (11), der ein MAC-Zieladressenfeld (23) hat und ein Feld umfasst, das eine Sendedauer angibt, während derer es einer ausgewählten Gegenstation (12a), die der Zieladresse entspricht, erlaubt wird, stromaufwärts zu der Kopfstelle (11) zu senden,
das Feststellen, ob das empfangene MAC-Zieladressenfeld eine MAC-Adresse enthält, die der Gegenstation (12a) zugewiesen ist, und
das Senden von stromaufwärts gerichteten Ethernet-Datenpaketen während zu der Kopfstelle (11) des angegebenen Zeitraumes, wenn die empfangene MAC-Zieladresse eine MAC-Adresse ist, die der Gegenstation (12a) zugewiesen ist.

15. Verfahren nach Anspruch 14, das ferner das Nicht-Senden stromaufwärts zu der Kopfstelle umfasst, wenn die empfangene MAC-Zieladresse nicht eine MAC-Adresse ist, die der Gegenstation zugewiesen ist.

16. Verfahren nach Anspruch 14, das ferner das Senden von stromaufwärts gerichteten Ethernet-Kommandorahmen umfasst, die Informationen enthalten, welche die Verfügbarkeit von Daten für eine stromaufwärts gerichtete Übertragung von den Gegenstationen zu der Kopfstelle angeben.

## Revendications

1. Procédé de conversion des paramètres de communications amont d'une pluralité de stations éloignées (12a, 12b, 12n) vers une tête de réseau (11) dans un réseau optique passif, le procédé comprenant les étapes consistant à :
générer une trame de commande Ethernet aval (30) ayant un champ d'adresse de destination MAC (23) correspondant à une station éloignée (12a) sélectionnée pour être autorisée à transmettre en amont vers la tête de réseau (11) et comprenant un champ indiquant une durée de transmission pendant laquelle la station éloignée sélectionnée (12a) est autorisée à transmettre en amont vers la tête de réseau (11) ; et
envoyer la trame de commande Ethernet aval (30) depuis la tête de réseau (11) afin de permettre qu'une station éloignée sélectionnée (12a) commence sa transmission en amont pendant la durée de transmission indiquée par la commande.

2. Procédé selon la revendication 1, comprenant en outre l'étape consistant à recevoir au niveau de la tête de réseau des trames de commande Ethernet amont transmises en amont depuis des stations éloignées, les trames de commande Ethernet amont contenant des informations indiquant une disponibilité de données pour la transmission en amont depuis les stations éloignées vers la tête de réseau.

3. Procédé selon la revendication 2, comprenant en outre l'étape consistant à répondre au niveau de la tête de réseau aux trames de commande Ethernet amont reçues afin d'ajuster dynamiquement les durées de transmission indiquées dans des trames de commande Ethernet aval transmises par la tête de réseau vers des stations éloignées sélectionnées.

4. Procédé selon l'une quelconque des revendications 1 à 3, dans lequel les étapes consistant à générer et envoyer la trame de commande Ethernet en aval sont réalisées dans une couche de commande MAC 802.3 de la tête de réseau.

5. Procédé selon l'une quelconque des revendications 1 à 4, dans lequel les trames de commande se distinguent des trames de données en ce qu'elles ont un champ longueur/type réglé à une valeur spécifique réservée aux trames de service.

6. Tête de réseau (11) pour un réseau de communications comprenant plusieurs stations éloignées (12a, 12b, 12n) raccordées à la tête de réseau (11) par un lien de transmission optique commun (14), la tête de réseau (11), comprenant :
un moyen (116) permettant de générer une trame de commande Ethernet aval (30) ayant un champ d'adresse de destination MAC (23) correspondant à une station éloignée (12a) sélectionnée pour être autorisée à transmettre en amont vers la tête de réseau (11) et comprenant un champ indiquant une durée de transmission pendant laquelle la station éloignée sélectionnée est autorisée à transmettre en aval vers la tête de réseau ; et
un moyen (110) permettant d'envoyer la trame de commande Ethernet aval depuis la tête de réseau (110) afin d'autoriser qu'une station éloignée sélectionnée commence sa transmission en amont pendant la durée de transmission indiquée par la commande.

7. Tête de réseau selon la revendication 6, comprenant en outre un moyen permettant de recevoir au niveau de la tête de réseau des trames de commande Ethernet amont transmises en amont depuis des stations éloignées, les trames de commande Ethernet amont contenant des informations indiquant la disponibilité de données pour une transmission en amont depuis les stations éloignées vers la tête de réseau.

8. Tête de réseau selon la revendication 7, comprenant en outre un moyen permettant de répondre au niveau de la tête de réseau aux trames de commande Ethernet amont reçues afin d'ajuster dynamiquement les durées indiquées dans les trames de commande Ethernet aval transmises par la tête de réseau vers des stations éloignées sélectionnées.

9. Tête de réseau selon l'une quelconque des revendications 6 à 8, dans laquelle une couche de commande MAC 802.3 de la tête de réseau comprend le moyen permettant de générer la trame de commande Ethernet aval et le moyen permettant d'envoyer la trame de commande Ethernet aval.

10. Tête de réseau selon l'une quelconque des revendications 6 à 9, dans laquelle les trames de commandes se distinguent des trames de données en ce qu'elles ont un champ longueur/type réglé à une valeur spécifique réservée aux trames de service.

11. Station éloignée (12a) pour un réseau de communications comprenant plusieurs stations éloignées (12a, 12b, 12n) connectées à une tête de réseau (11) par un lien de transmission optique commun (14), la station éloignée comprenant :
un moyen (122) permettant de recevoir depuis la tête de réseau une trame de commande Ethernet aval (30) ayant un champ d'adresse de destination MAC (23) et comprenant un champ indiquant une période pendant laquelle une station éloignée sélectionnée correspondant à l'adresse de destination est autorisée à transmettre en amont vers la tête de réseau (11) ;
un moyen (126) permettant de déterminer si le champ d'adresse de destination MAC reçu contient une adresse MAC attribuée à la station éloignée (12a) ; et
un moyen (120) permettant de transmettre vers la tête de réseau (11) des paquets de données Ethernet amont pendant la période indiquée lorsque l'adresse de destination MAC reçue est une adresse MAC attribuée à la station éloignée (12a).

12. Station éloignée selon la revendication 11, dans laquelle le moyen permettant de transmettre réagit au moyen permettant de déterminer de ne pas transmettre en amont vers la tête de réseau lorsque l'adresse de destination MAC reçue n'est pas l'adresse MAC attribuée à la station éloignée.

13. Station éloignée selon la revendication 11, comprenant en outre un moyen permettant de transmettre des trames de commande Ethernet amont contenant des informations indiquant la disponibilité de données pour la transmission en amont depuis la station éloignée vers la tête de réseau.

14. Procédé d'exploitation d'une station éloignée pour un réseau de communication comprenant plusieurs stations éloignées (12a, 12b, 12n) connectées à une tête de réseau (11) par un lien de transmission optique commun (14), le procédé comprenant les étapes consistant à :
recevoir de la tête de réseau (11) une trame de commande Ethernet aval (30) ayant un champ d'adresse de destination MAC (30) et comprenant un champ indiquant une période pendant laquelle une station éloignée sélectionnée (12a) correspondant à l'adresse de destination est autorisée à transmettre en amont vers la tête de réseau (11) ;
déterminer si l'adresse de destination MAC est une adresse MAC attribuée à la station éloignée (12a) ; et
transmettre vers la tête de réseau (11) des paquets de données Ethernet amont pendant la période indiquée lorsque l'adresse de destination MAC reçue est une adresse MAC attribuée à la station éloignée (12a).

15. Procédé selon la revendication 14, comprenant en outre l'étape consistant à ne pas transmettre en amont vers la tête de réseau lorsque l'adresse de destination MAC reçue n'est pas une adresse MAC attribuée à la station éloignée.

16. Procédé selon la revendication 14, comprenant en outre l'étape consistant à transmettre en amont des trames de commande Ethernet amont contenant des informations indiquant la disponibilité de données pour une transmission en amont depuis la station éloignée vers la tête de réseau.
